# EUROPEAN PATENT APPLICATION

(11) **EP 1 182 836 A2**
(43) Date of publication of application: **27.02.2002**
(21) Application number: 01127617.7
(22) Date of filing: 16.09.1993
(51) Int. Cl.: H04L 25/03, H04B 7/005

(54) **Adaptive equalising receiver and maximum likelihood sequence estimating receiver**

(30) Priority: 18.09.1992 JP 24936692; 18.09.1992 JP 24936792; 18.09.1992 JP 24936892
(62) Divisional of application: 93919666.3
(71) Applicant: Oki Electric Industry Company, Limited, Tokyo 105 (JP)
(72) Inventor: Hayashi, Hiroshi, c/oOki Electric Industry Co. Ltd, Tokyo 105 (JP); Ono, Shigeru, c/oOki Electric Industry Co. Ltd., Tokyo 105 (JP); Kondo, Noriaki, c/oOki Electric Industry Co. Ltd., Tokyo 105 (JP)
(74) Representative: Boydell, John Christopher

(57) **Abstract**

The present invention is an adaptive equalizing receiver and a maximum likelihood sequence estimating receiver that compensate deterioration of transmission characteristics. A transmission line estimating circuit (5) estimates an impulse response of a transmission line with a received signal. A switch (7) selectively supplies an output of an adaptive equalizing circuit (10) that adaptively equalizes the received signal or an output of a code deciding circuit (9) that decides the code of the received signal and outputs the signal corresponding to the estimated impulse response.

A number-of-tap variable type adaptive filter adaptive equalizes the received signal. A number-of-tap setting means controls the number of taps of the adaptive filter corresponding to the impulse response estimated.

A transversal matched filter and a status estimating circuit that performs maximum likelihood estimation for a transmitted symbol sequence with an output of the transversal matched filter adaptive equalize the received signal. The number-of-tap setting means controls the number of taps of the matched filter and the number of statuses to be considered for the status estimating circuit corresponding to the estimated impulse response.

## Description

### Technical Field

The present invention relates to an adaptive equalizing receiver and a maximum likelihood sequence estimating (MLSE) receiver, in particular, to an apparatus for compensating transmission characteristics deteriorated by fading of frequency selectivity in high speed mobile digital communications.

### Related Art

In recent years, technologies that accomplish high speed digital mobile communications have been studied. In the high speed digital mobile communications, due to multi-path transmission, frequency selectivity occasionally fades, thereby remarkably deteriorating transmission characteristics. In other words, when data with a transmission of several hundred kbps or higher is transmitted from a fixed station to a mobile station (such as a car telephone), the mobile station receives indirect waves reflected by mountains, buildings, and the like as well as the direct wave. Thus, the shape of the wave received by the mobile station differs from the shape of the direct wave. As a result, the signal level of the received wave varies time by time. In addition, since the car moves, the signal level varies corresponding to the speed of the car. Depending on the speed of the car, the frequency of the variation of the signal level changes. Thus, since the signal level unregularly varies, if the received wave that has been PSK (Phase Shift Keying) modulated is affected by a multi-path transmission, an erroneous code (signal) may be output.

In this case, to compensate the error, the received signal that has been deteriorated is compensated by an adaptive equalizer or the like. A related art reference about such an adaptive equalizer is described in for example "Adaptive Equalization for TDMA Digital Mobile Radio", IEEE Transactions on Vehicular Technology, Vol. 40, No. 2, pp. 333 - 341, May, 1991.

In addition, receivers provided with such an adaptive equalizer have been developed. These receives have a decision feedback equalizer, a linear equalizer, or the like. Moreover, MLSE receivers are also known.

Next, a decision feedback equalizer and a linear equalizer, which are used in adaptive equalizing receivers, will be described. The decision feedback equalizer and the linear equalizer are constructed of a transversal filter. Tap coefficients of the transversal filter are set so that a multi-path wave (namely, a composite wave of a direct wave and delayed waves) is equalized. In addition, tap coefficients are adaptively updated corresponding to the condition of a transmission line. As the delay time of delayed waves against a direct wave in a multi-path wave becomes long, the number of taps of a transversal filter should be increased. However, as the number of taps increases, the calculating steps necessary for updating the number of taps adversely increases.

In a MLSE receiver, an out-band noise of a received signal is removed by a filter. The resultant signal is digitized and sent to a matched filter that minimizes the influence of the noise. The output signal is sent to a status estimating circuit that performs maximum likelihood estimation for a transmitted symbol. As a maximum likelihood estimating algorithm for use in the status estimating circuit, for example, Viterbi algorithm is employed. The tap coefficients of the matched filter is set corresponding to impulse responses of a transmission line estimated before and just when data is processed. The impulse responses of the transmission line, which have been estimated, are also used for maximum likelihood estimation for a transmitted symbol.

When the frequency selectivity fades, the MLSE receiver generally has higher receiving characteristics than other adaptive equalizing receivers. However, when the maximum delay time of a multi-path wave becomes long, the time period between the impulse responses to be considered becomes long. Thus, the processing amount that the status estimating circuit performs for the maximum likelihood estimation for the transmitted symbol exponentially increases. Thus, so far, it was thought that the MLSE receiver was difficult to accomplish. However, recently, since digital signal processing technologies are being actively developed, studies for practically employing the MLSE receivers are widely being performed.

To practically employ the MLSE receivers with the latest digital signal processing technologies, it is important to reduce the processing amount that the status estimating circuit performs. This matter relates to the selection of the time period between impulse responses to be considered. Conventionally, a time period for which good receiving characteristics are achieved and a status estimating circuit is practically employed has been selected.

In addition, so far, the number of taps of the matched filter has been determined corresponding to the time period between the impulse responses to be considered.

EP-A-0415897 describes a method of reducing the power consumption of a mobile telephone when receiving signals from its base station. In the receiving circuit of the mobile telephone incoming baseband signals are demodulated and optionally equalised so as to compensate for multipath propagation between the base station and the mobile telephone. By estimating the time dispersion of the received signals prior to their demodulation a decision is taken whether or not the signals should be equalised, depending upon whether the time dispersion is above or below a predetermined value.

EP-A-0426026 describes an adaptive equaliser for use in a digital radio receiver. The equaliser comprises a computing unit which receives a string of known signals to estimate transmission line characteristics, and to follow changes in these characteristics without limiting the data transmission rate.

An object of the present invention is to provide an adaptive equalising receiver that minimises calculating amount for adaptive equalisation without deteriorating equalising characteristics of a received signal.

Another object of the present invention is to provide a MLSE receiver that reduces calculating amount performed by status estimating means and decreases a delay of processing in a receiver without deteriorating equalising characteristics of a received signal.

According to the invention, there is provided an adaptive equalising receiver, comprising:-
transmission line estimating means for estimating the impulse response of a transmission line to a received signal;
an adaptive filter for setting the number of valid taps and adaptive equalising a supplied signal, said adaptive filter having a tap coefficient corresponding to the estimated impulse response of the transmission line; and
number-of-tap setting means for calculating the number of taps of said adaptive filter corresponding to a minimum time period of the estimated impulse response of the transmission line.

In an embodiment of the invention, said adaptive filter takes the form of a transversal matched filter having a tap coefficient corresponding to the estimated impulse response output by said transmission line estimating means, thereby setting the number of valid taps and minimising the influence of noise of said received signal;
said adaptive equalising receiver further comprising status estimating means for setting the number of statuses to be considered and performing maximum likelihood estimation for a transmitted symbol sequence with an output of said matched filter corresponding to the estimated impulse response output by said transmission line estimating means; and
wherein said number-of-tap setting means is operable to calculate the number of taps of said matched filter and the number of statuses to be considered corresponding to a minimum time period for which the estimated impulse response output by said transmission line estimating means is represented and to set the number of taps of said matched filter and the number of statuses of said status estimating means.

### Brief Description of Drawings

Figure 1 is a functional block diagram showing an adaptive equalising receiver according to a first embodiment of the present invention;
Figures 2(a) and (b) are graphs showing examples of impulse responses of transmission lines;
Figure 3 is a graph showing an example of an impulse response of a transmission line (No. 2);
Figure 4 is a graph showing an example of an impulse response of a transmission line (No. 3);
Figure 5 is a schematic diagram showing a construction of a transmission line estimating circuit;
Figure 6 is a schematic diagram showing a construction of an adaptive equalising circuit;
Figure 7 is a functional block diagram showing an adaptive equalising receiver according to a second embodiment of the present invention;
Figures 8(a) and (b) are graphs showing examples of impulse responses of transmission lines (No. 4);
Fig. 9 is a schematic diagram showing a construction of a transversal filter;
Fig. 10 is a block diagram showing a maximum likelihood estimating equalizer for use in the adaptive equalizing receiver of Fig. 1;
Fig. 11 is a block diagram showing a MLSE receiver;
Fig. 12 is a block diagram showing a detailed construction of a status estimating circuit; and
Fig. 13 is a block diagram showing the equalizer according to the second embodiment for use in the adaptive equalizing receiver of Fig. 1.

### Best Modes for Carrying out the Invention

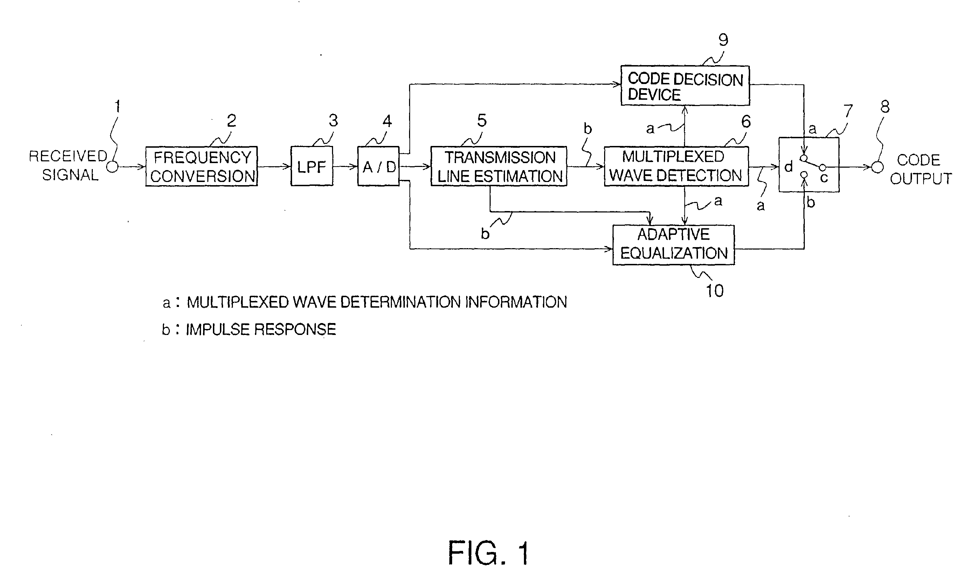

Referring to the accompanying drawings, preferred embodiments of an adaptive equalizing receiver according to the present invention will be described. Fig. 1 is a functional block diagram showing an adaptive equalizing receiver according to a first embodiment of the present invention. In Fig. 1, the adaptive equalizing receiver comprises an input terminal 1, a frequency converting circuit 2, a low-pass filter (LPF) 3, an analog/digital (A/D) converter 4, a transmission line estimating circuit 5, a multiplexed wave detecting circuit 6, a switch 7, an output terminal 8, a code deciding circuit 9, and an adaptive equalizing circuit 10.

In Fig. 1, the input terminal 1 is a receiving means such as an antenna. A high frequency signal of several hundred kbps or higher that has PSK modulated is supplied to the frequency converting circuit 2 via input terminal 1. The frequency converting circuit 2 performs synchronous detecting for the high frequency signal and converts the high frequency signal into a base-band signal. The base-band signal is supplied to the low-pass filter 3. Now assume that the received signal with the frequency of several hundred kbps or higher contains a training signal, which is a known signal sequence, as well as data.

The low-pass filter (LPF) 3 removes noise components, which are out of a desired band, from the base-band signal received from the frequency converting circuit 2 and supplies the resultant signal to the analog/digital (A/D) converter **4.** The analog/digital (A/D) converter 4 converts each sample of the received signal into digital data with a predetermined number of bits. The resultant digital signal is supplied to the transmission line estimating circuit 5, the code deciding circuit 9, and the adaptive equalizing circuit 10.

The transmission line estimating circuit 5 estimates impulse response characteristics of a transmission line with the received digital signal, which is supplied from the analog/digital (A/D) converter 4, and the training signal sequence, which is supplied from an internal training signal generating circuit. The impulse response characteristics mean an impulse response of a transmission line from which a multi-path wave, which is a composite wave of a direct wave and delayed waves, is received. A sample value of the transmission line is supplied to the multiplexed wave detecting circuit 6 and the adaptive equalizing circuit 10.

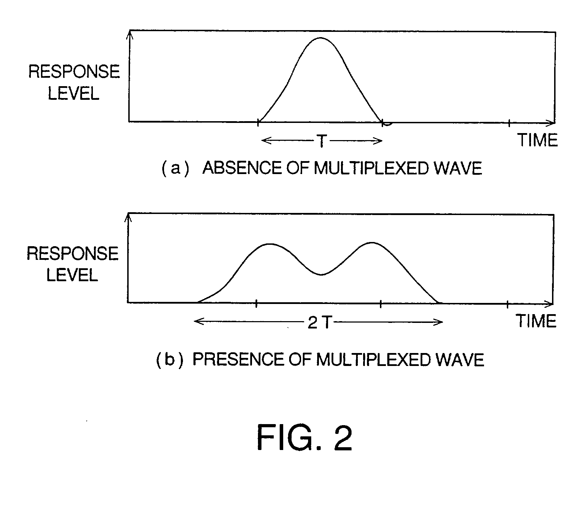

Figs. 2 (a) and (b) are graphs showing examples of impulse responses of transmission lines in the transmission line estimating circuit 5 according to the first embodiment of the present invention. In Figs. 2 (a) and (b), one division T of time axis represents one symbol period. Fig. 2 (a) shows characteristics in the case that an impulse response is not a multiplexed wave (namely, only a direct wave rather than a multi-path transmission is received). In this case, the impulse response of the transmission line is placed in one symbol period T.

On the other hand, Fig. 2 (b) shows characteristics in the case that an impulse response is a multiplexed wave (namely, a multiplexed wave of a direct wave and delayed waves is received as a multi-path transmission). In this case, the impulse response of the transmission line is not placed in one symbol period T.

The multiplexed wave detecting circuit 6 shown in Fig. 1 determines whether or not a sample value of an impulse response supplied from the transmission line estimating circuit 5 is placed in one symbol period T. The determined result that is multiplexed wave determination information is supplied to the code deciding circuit 9, the adaptive equalizing circuit 10, and a control input d of the switch 7.

The code deciding circuit 9 decides a code received from the analog/digital (A/D) converter 4 so as to estimate a transmitted symbol. The estimated symbol is supplied to an input 7a of the switch 7.

The adaptive equalizing circuit 10 adaptive equalizes the code supplied from the analog/digital (A/D) converter 4. The operation for the adaptive equalization is controlled corresponding to the multiplexed wave determination information supplied from the multiplexed wave detecting circuit 6. In other words, when the determined result of the received signal is a multiplexed wave, the operation for the adaptive equalization is executed. When the determined result of the received signal is not a multiplexed wave, the operation for the adaptive equalization is stopped. The output code for the adaptive equalization is supplied to an input 7b of the switch 7.

When the determined result of the received signal corresponding to the multiplexed wave determination information is a multiplexed wave, the switch 7 outputs a code, where delayed waves contained in the multiplexed wave have been equalized, to the output terminal 8. On the other hand, when the determined result of the received signal corresponding to the multiplexed wave determination information is not a multiplexed wave, the switch 7 outputs a code that is supplied from the code deciding circuit 9 to the output terminal 8.

Thus, depending on whether such a multiplexed wave is detected or not, the switch 7 selects one of the equalized output of the adaptive equalizing circuit 10 and the output of the code deciding circuit 9 and thereby outputs a code where noise of the multi-path transmission has been removed.

Next, a practical method for detecting a multiplexed wave performed in the multiplexed wave detecting circuit 6 will be described.

The multiplexed wave detecting circuit 6 can detect a multiplexed wave with a sequence of energy of an impulse response supplied from the transmission line estimating circuit 5.

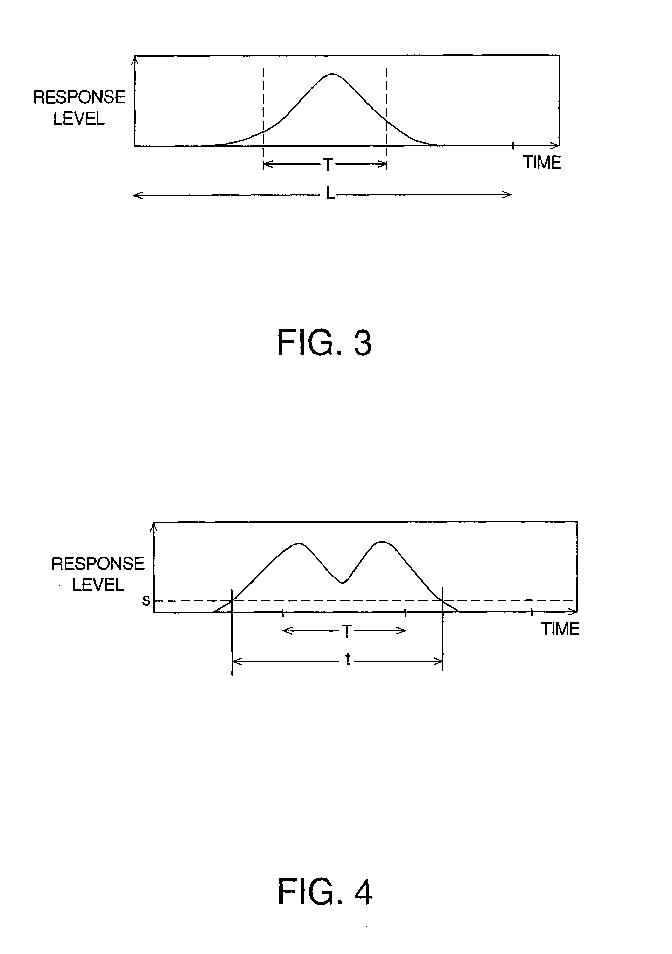

For example, Fig. 3 shows characteristics in the case that an impulse response of a transmission line is estimated. In Fig. 3, L represents an observation time period for an impulse response of a transmission line, whereas T represents one symbol (code) period where the maximum level of the impulse response is centered.

The multiplexed wave detecting circuit 6 calculates energy in the observation time period L and energy in one symbol period T so as to obtain the ratio therebetween. When the ratio is higher than or equal to a predetermined threshold value A, the multiplexed wave detecting circuit 6 determines that the impulse response is not placed in one symbol period T. Thus, the multiplexed wave detecting circuit 6 determines that the received signal is a multiplexed wave and outputs information thereof. On the other hand, when the ratio is less than the threshold value A, the multiplexed wave detecting circuit 6 determines that the received signal is not a multiplexed wave and outputs information thereof.

Next, another method for detecting a multiplexed wave performed in the multiplexed wave detecting circuit 6 will be described. For example, the multiplexed wave detecting circuit 6 calculates a time period for which a sample value of an impulse response of a transmission line supplied from the transmission line estimating circuit 5 exceeds a predetermined threshold value S. The multiplexed wave detecting circuit 6 can determine whether or not the received signal is a multiplexed wave.

This operation of the multiplexed wave detecting circuit 6 will be described in more detail. In Fig. 4, S represents a predetermined threshold value, whereas t represents a time period for which the level of an impulse response of a transmission line exceeds the threshold value S. The multiplexed wave detecting circuit 6 calculates a time period t for which the impulse response of the transmission line exceeds the threshold value S. When t < T, the multiplexed wave detecting circuit 6 determines that the received signal is not a multiplexed wave and outputs information thereof. When t > T, the multiplexed wave detecting circuit 6 determines that the received signal is a multiplexed wave and outputs information thereof.

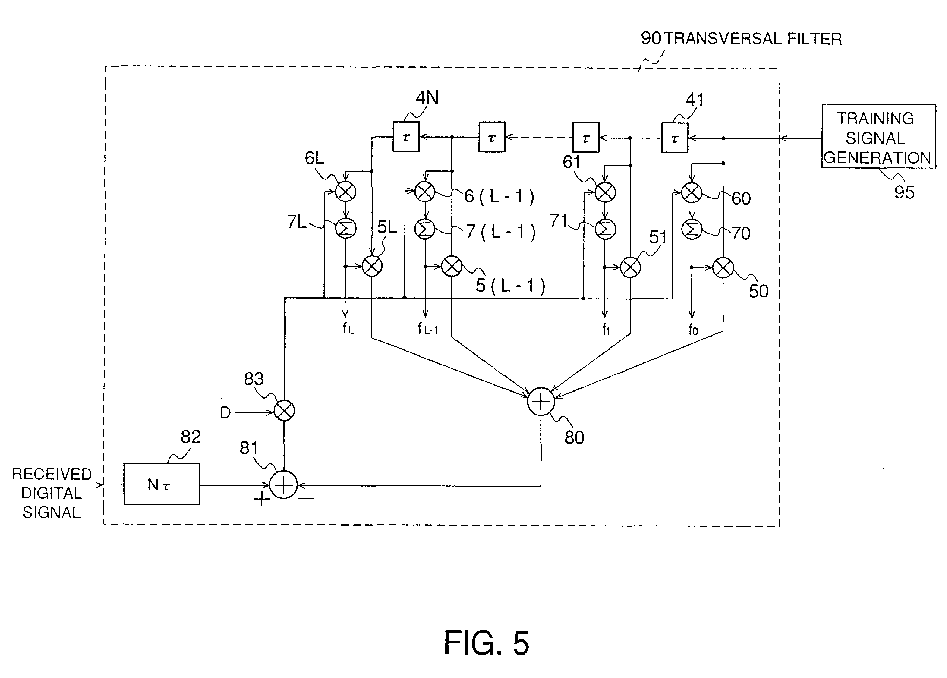

Fig. 5 is a schematic diagram showing a construction of the transmission line estimating circuit 5.

In Fig. 5, the transmission line estimating circuit 5 comprises a transversal filter 90 and a training signal generating circuit 95. The training signal generating circuit 95 supplies a training signal to a delaying device 41. The analog/digital (A/D) converter 4 supplies the received digital signal to a delaying device 82.

Output signals of delaying devices 41 to 4N are supplied to respective multipliers 50 to 5L and respective multipliers 60 to 6L. The multipliers 50 to 5L multiply signals supplied from the delaying devices 41 to 4N by the signals received from adders 70 to 7L, respectively. The multiplied results that serve as tap coefficients (filter coefficients) are supplied to an adder 80. The adder 80 adds the multiplied results of the multipliers 50 to 5L and supplies the added result to an adder 81.

The adder 81 subtracts the added result of the adder 80 of the transversal filter 90 from the received signal supplied from the delaying device 82 and then supplies a resultant signal (thus, difference signal) to a multiplier 83. The multiplier 83 multiplies the difference signal by a constant D and supplies the multiplied result to the multipliers 60 to 6L. The multipliers 60 to 6L multiply the signals supplied from the delaying devices 41 to 4N by the signal supplied from the multiplier 83 and supplies the multiplied results to the adders 70 to 7L, respectively. The adders 70 to 7L add the products of the signals supplied from the multipliers 60 to 6L as tap coefficients f0 to f1 that represent an impulse response of a transmission line. The added signals are supplied to the multiplexed wave detecting circuit 6 and the adaptive equalizing circuit 10. The added signals are also supplied as multiplying coefficients (tap coefficients) of the multipliers 50 to 5L.

Thus, the transmission line estimating circuit 5 outputs the sample values f0 to fL of the impulse response of the transmission line as tap coefficients of the filter.

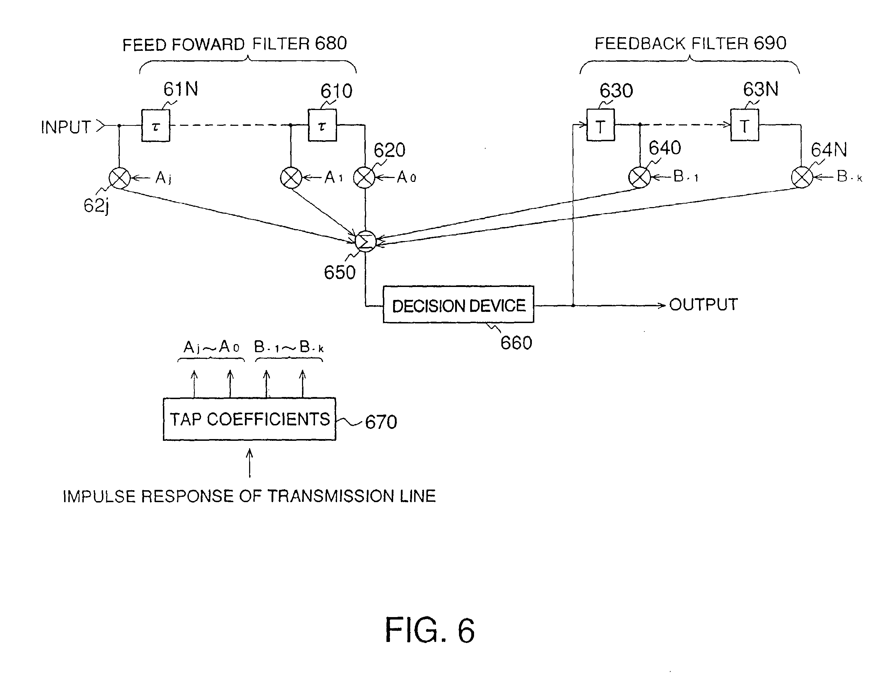

Fig. 6 is a schematic diagram showing a construction of the adaptive equalizing circuit 10 that is a decision feedback equalizer (DFE). The DFE comprises a feed forward filter 680, a feedback filter 690, and a deciding circuit 660. The feed forward filter 680 and the feedback filter 690 adaptive equalize an input signal. The deciding circuit 660 outputs the equalized output of the input signal. Depending on the determined information (multiplexed wave determination information) supplied from the multiplexed wave detecting circuit 6, the operation of the filter is stopped or resumed. As another method, the power supplied to the DFE may be stopped or resumed depending on the multiplexed wave determination information.

A tap coefficient setting circuit 670 receives an impulse response of a transmission line from the transmission line estimating circuit 5 so as to set the tap coefficients of the filter.

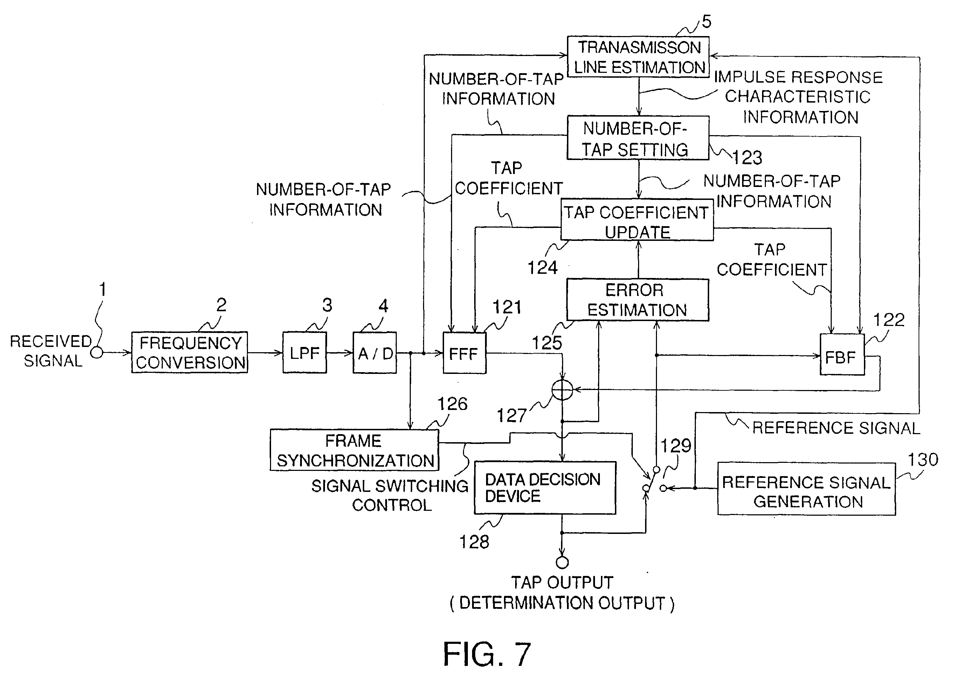

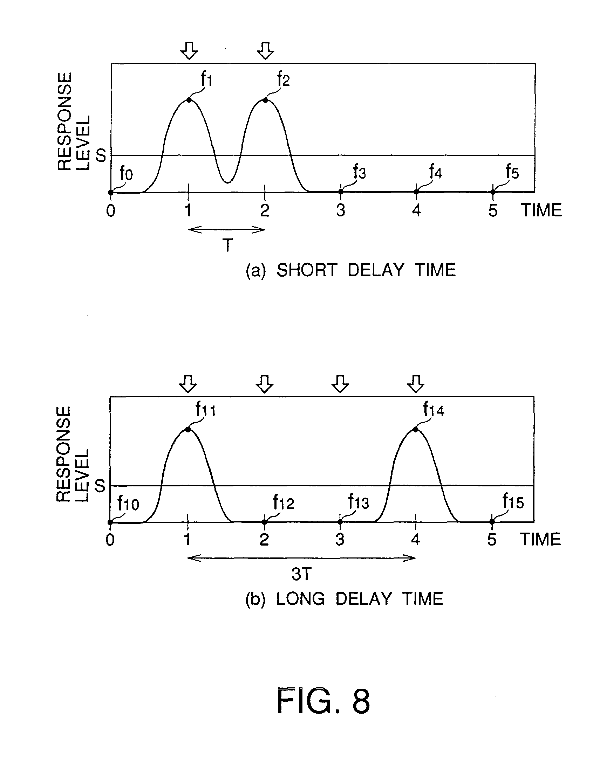

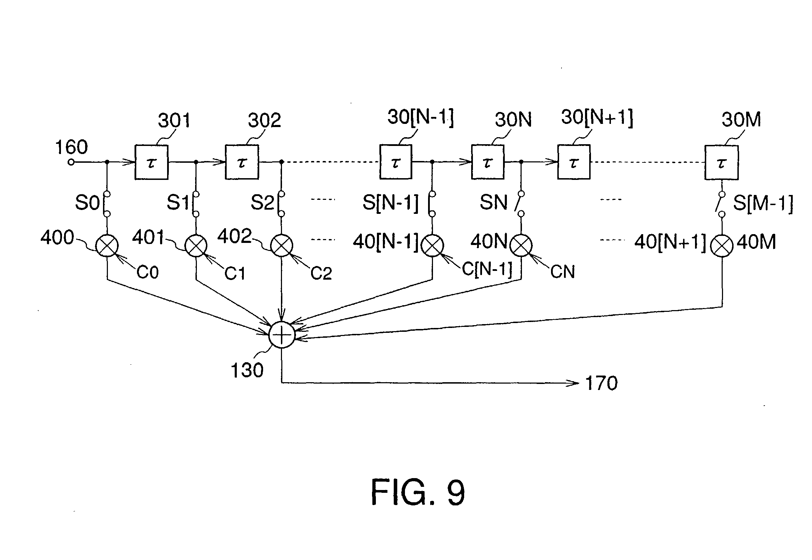

Fig. 7 is a functional block diagram showing an adaptive equalizing receiver according to a second embodiment of the present invention. Figs. 8 (a) and (b) are graphs showing examples of impulse responses of a transmission lines (No. 4). Fig. 9 is a schematic diagram showing a construction of a transversal filter for use in the feedback filter and the feed forward filter of Fig. 7. Next, with reference to Figs. 7, 8 (a), 8 (b), and 9, a second embodiment of the present invention and a tap coefficient setting operation will be described in detail.

Fig. 8 shows an example of an estimation of impulse response characteristics of a transmission line in the case that one direct wave and one delayed wave are received by an antenna. Fig. 8 (a) shows impulse response characteristics in the case that the delay time of the delayed wave against the direct wave is relatively short. Fig. 8 (b) shows impulse response characteristics in the case that the delay time of the delayed wave against the direct wave is relatively long.

In the case of the characteristics shown in Fig. 8 (a), the transmission line estimating circuit 5 outputs sample values f0 to f5 of an impulse response represented with black circles "•" at time period T and supplies them to a number-of-tap setting circuit 123.

The number-of-tap setting circuit 123 sets as the number of taps the time period T for which sample values f1 and f2 of an impulse response that exceed a predetermined threshold value S are placed.

When the DFE adaptive equalizes a delayed wave with a maximum delay time period m • T (where m is a positive integer), a feedback filter (FBF) 122 requires at least m taps. On the other hand, a feed forward filter (FFF) 121 requires at least (m + 1) • T taps. When the delay time of each of the delaying devices 500 to 50(N + 1) of the feed forward filter (FFF) 121 of Fig. 9 is T/2, the feed forward filter (FFF) 121 requires (m + 1) • 2 taps.

In the case of Fig. 8 (a), according to the number-of-tap determining condition, since the time period is 1 • T (m = 1), the number of taps of the feed forward filter (FFF) 121 is set to 4 and this number is supplied to the feed forward filter (FFF) 121. Thus, the feed forward filter (FFF) 121 closes four taps S0 to S3 and opens the rest of the taps.

When the number-of-tap setting circuit 123 sets the number of taps corresponding to a delay time period T of each of τ time period delaying devices 500 to 50(N + 1) of the feedback filter (FBF) 122, the number of taps of the feedback filter (FBF) 122 becomes 1. The number-of-tap information is supplied to the feedback filter (FBF) 122 and thereby the number of taps thereof is set. Thus, the feedback filter (FBF) 122 closes a tap S0 and opens the rest of the taps.

The number-of-tap information, which represents that the number of taps of the feed forward filter (FFF) 121 is 4 and the number of taps of the feedback filter (FBF) 122 is 1, is also supplied to a tap coefficient updating circuit 124.

Fig. 8 (b) shows an impulse response in the case that delay time of a delayed wave against a direct wave is relatively long. In the case of the characteristics shown in Fig. 8 (b), the transmission line estimating circuit 5 outputs sample values f10 to f15 of an impulse response represented with black circles "•" at a time period T and supplies them to the number-of-tap setting circuit 123. The number-of-tap setting circuit 123 sets as the number of taps the time period 3T for which the sample values f11 and f14 of the impulse response that exceed the predetermined threshold value S are placed.

In Fig. 8 (b), since the maximum delay time is 3T, the feedback filter (FBF) 122 requires at least three taps (thus, m = 3). The delay time of each of the delaying devices 500 to 50(N + 1) of the feed forward filter (FBF) 122 is T/2 and the number of taps of the feed forward filter (FFF) 121 is (m + 1) • 2. Thus, when m = 3, the number of taps of the feed forward filter (FFF) 121 becomes 8.

The number-of-tap information, which represents the number of taps is 3, is supplied to the feedback filter (FBF) 122. Thus, the number of taps of the feedback filter (FBF) 122 is set to 3. This number-of-tap information is also supplied to the tap coefficient updating circuit 124. In addition, the number-of-tap information, which represents ha the number of taps is 8, is supplied to the feed forward filter (FFF) 121. Thus, the number of taps of the feed forward filter (FFF) 121 is set to 8. This number-of-tap information is also supplied to the tap coefficient updating circuit 124.

The tap coefficient updating circuit 124 sets filter coefficients corresponding to error information supplied from the error estimating circuit 125 so that the error of the number of taps becomes minimum. In other words, the tap coefficient updating circuit 124 sets the number of taps corresponding to the tap information, which represents that the number of taps is 3 and supplies this number to the feedback filter (FBF) 122 so as to set the number of taps of the feedback filter (FBF) 122 to 3. In addition, the tap coefficient updating circuit 124 sets the number of taps of the feed forward filter (FFF) 121 to 8.

When a delayed wave due to a multi-path transmission is not present, since only a direct wave is present in an impulse response of a transmission line, no delay time takes place as opposed to the example shown in Figs. 8 (a) and (b). Thus, the number of taps of the feedback filter (FBF) 122, which is denoted by m • T, becomes 0. On the other hand, the number of taps of the feed forward filter (FFF) 121, which is denoted by (m + 1) • 2, becomes 2. Corresponding to the number of taps, the tap coefficient updating circuit 124 sets the tap coefficients.

The feed forward filter (FFF) 121 adaptive equalizes the digital signal supplied from the analog/digital (A/D) converter 4 with the tap coefficients corresponding to the number-of-tap information and supplies the resultant signal to the adder 127.

The adder 127 adds the signal supplied from the feed forward filter (FFF) 121 and the signal supplied from the feedback filter (FBF) 122 and supplies the added signal to a data deciding circuit 128 and an error estimating circuit 125. The data deciding circuit 128 decides data with the added signal supplied from the adder 127. In other words, the data deciding circuit 128 decides whether the code of the added signal is in logical 0 level or logical 1 level and outputs the code of the adapted equalized output. The output code is supplied to the error estimating circuit 125 and the feedback filter (FBF) 122 through a switch 129.

While the training signal is being received, the switch 129 supplies a reference signal supplied from a reference signal generating circuit 130 to the error estimating circuit 125 and the feedback filter (FBF) 122. While the training signal is not being received, the output signal of the data deciding circuit 128 is supplied to the error estimating circuit 125 and the feedback filter (FBF) 122. The error estimating circuit 125 calculates the difference between the added signal supplied from the adder 127 and the signal supplied from the switch 129 and supplies the difference that serves as an error of adaptive equalization to the tap coefficient updating circuit 124.

Fig. 9 is a schematic diagram showing a construction of a transverse (or Filter-In-Row: FIR) type filter that constructs the feed forward filter (FFF) 5 and the feedback filter (FBF) 6.

In Fig. 9, the transverse (FIR) type filter comprises τ time period delaying devices 301 to 30(M - 1), taps S0 to SM, multipliers 400 to 40M, and an adder 130. The taps S0 to SM are open/close switches.

An input signal is supplied to the delaying device 301 and the tap S0. Output signals of the delaying devices 301 to 30(M - 1) are supplied to the taps S1 to SM, respectively. The taps S0 to SM are opened and closed by a number-of-tap setting signal supplied from the number-of-tap setting circuit 123. When the taps S0 to S(N - 1) are closed, the output signals are supplied to the respective multipliers 400 to 40(N - 1).

The multipliers 400 to 40(N - 1) multiply tap coefficients C0 to C(N - 1) supplied from the tap coefficient updating circuit 124 by the respective signals supplied by the taps S0 to S(N - 1) and supply the respective multiplied results to the adder 130. The adder 130 outputs the added result.

In the case of the transversal filter used for the feed forward filter (FFF) 121, the delay time of each of the τ time period delaying devices 301 to 30M is T/2 where T represents the time period of one symbol of transmitted data. On the other hand, in the case of the feedback filter (FBF) 122, the delay time is T.

In the adaptive equalizer according to the second embodiment, the characteristics of the transmission line are represented with impulse response characteristics. The number of taps is determined corresponding to the minimum time period, which represents the impulse response characteristics. The determined number of taps is set to the feed forward filter (FFF) 121 and the feedback filter (FBF) 122. When a delayed wave due to a multi-path transmission is equalized, it is adaptive equalized corresponding to the number of taps. In addition, the number of taps at minimum time period can be set whenever each transmission line is estimated. Thus, the calculating amount of the feed forward filter (FFF) 121 and the feedback filter (FBF) 122 is reduced.

When the amount of data transmitted as a multi-path transmission is small, since the number of taps is set to a minimum value, the calculating amount becomes minimum and thereby adaptive equalizing speed increases.

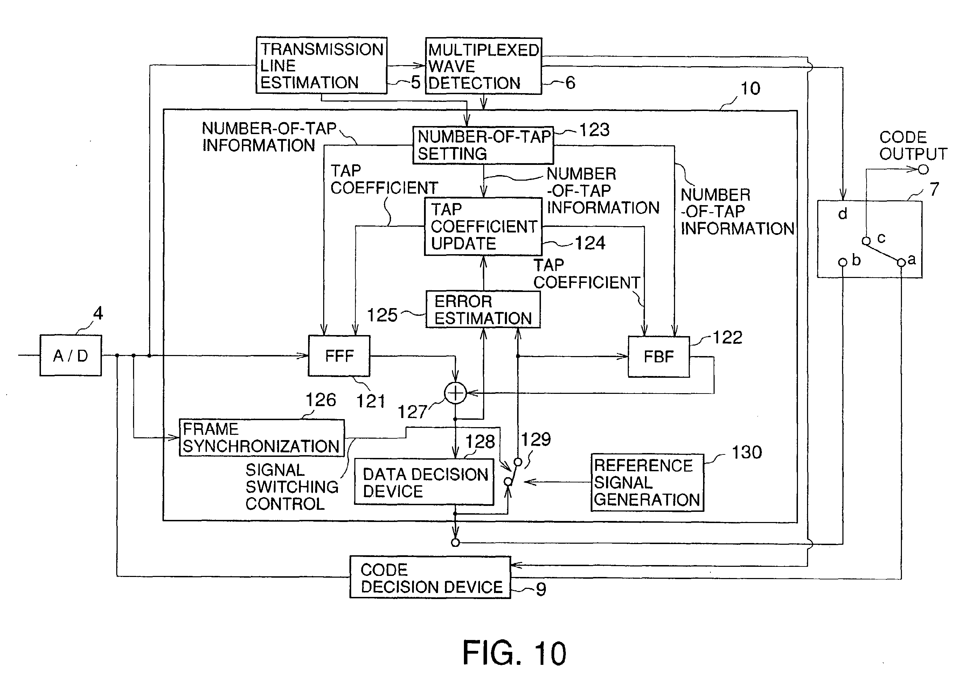

Next, the adaptive equalizer of the second embodiment that is used in the first embodiment will be described. Fig. 10 is a block diagram showing the equalizer of the second embodiment that is used in the adaptive equalizing receiver of Fig. 1. In other words, Fig. 10 shows a construction where the adaptive equalizer shown in Fig. 7 is used in the adaptive equalizing circuit shown in Fig. 1.

As described in the first embodiment, an analog/digital (A/D) converter 4 supplies a received digital signal to a transmission line estimating circuit 5, a code deciding circuit 9, and an adaptive equalizing circuit 10.

The transmission line estimating circuit 5 estimates impulse response characteristics of a transmission line with a received digital signal supplied from the analog/digital (A/D) converter 4 and a training signal sequence supplied from an inner training signal generating circuit. The transmission line estimating circuit 5 supplies a sample value of the impulse response of the transmission line to a multiplexed wave detecting circuit 6 and the adaptive equalizing circuit 10.

The multiplexed wave detecting circuit 6 determines whether or not the sample value supplied from the transmission line estimating circuit 5 is placed in one symbol period T. The determined result that serves as multiplexed wave determination information is supplied to a code deciding circuit 9, the adaptive equalizing circuit 10, and a control input d of a switch 7. The adaptive equalizing circuit 10 and the code deciding circuit 9 are controlled by the multiplexed wave determination information supplied from the multiplexed wave detecting circuit 6. When the determined result of the received signal is a multiplexed wave, the operation for adaptive equalization is not performed. Thus, the code deciding circuit 9 does not operate. On the other hand, when the determined result of the received signal is not a multiplexed wave, the code deciding circuit 9 operates, thereby stopping the operation for the adaptive equalization.

Likewise, when the determined result of the received signal according to the multiplexed wave determination information supplied from the multiplexed wave detecting circuit 6 is a multiplexed wave, the switch 7 outputs the output code, where the delayed wave contained in the multiplexed wave has been equalized, from a switch terminal 7c. When the determined result of the received signal corresponding to the multiplexed wave determination information is not a multiplexed wave, since the received signal is a direct wave and thereby it does not contain a delayed wave as a multi-path transmission, the switch 7 outputs the code, which has been supplied from the code deciding circuit 9, from the switch terminal 7c.

According to this embodiment, the multiplexed wave detecting circuit 6 determines whether or not the received signal is a multiplexed wave composed of a direct wave and delayed waves received through a multi-path transmission. When the determined result of the received wave is not a multiplexed wave, the received signal is not adaptive equalized and a code decided by the code deciding circuit 9 is output. When the determined result is a multiplexed wave, a code that has been adaptive equalized is output.

An example of the transmission line estimating circuit 5 according to the first and second embodiments was shown in Fig. 5. However, it should be understood that the present invention is not limited to such a construction. Instead, with a complex cross-correlation function of a received signal and a training signal, an impulse response of a transmission line may be obtained. An example of this technique is described in "Adaptive Equalization in TDMA Digital Mobile Communications (translated title)", The Institute of Electronics, Information, and Communication Engineers of Japan, Technical Paper B-II, Vol. J72-B-11, No. 11, November, 1989, pp. 587 - 594.

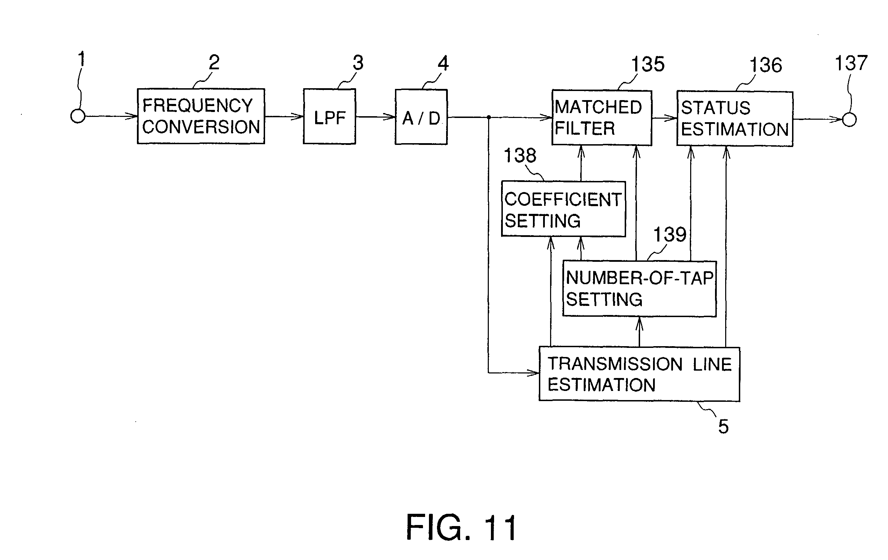

Next, a construction of a MLSE receiver will be described with reference to Fig. 11. In Fig. 11, the MLSE receiver comprises a received signal input terminal 1, a frequency converting circuit 2, a low-pass filter (LPF) 3, an analog/digital (A/D) converter 4, a transmission line estimating circuit 5, a matched filter 135, a status estimating circuit 136, an estimated signal output terminal 7, a coefficient setting circuit 138, and a number-of-tap setting circuit 139.

In Fig. 11, since the constructions of the portions from the received signal input terminal 1 to the analog/digital (A/D) converter 4 are the same as those in the first embodiment, their description is omitted.

The matched filter 135 uses a number-of-tap variable filter shown in Fig. 9. When the number-of-tap setting circuit 139 receives an impulse response estimated by the transmission line estimating circuit 5, the number-of-tap setting circuit 139 determines the number of taps that is suitable for the matched filter 135 (the number of taps accords with the minimum time period of an impulse response). The determined number is supplied to the matched filter 135 and the coefficient setting circuit. The number-of-tap setting circuit 139 calculates the number of statuses to be considered in the status estimating circuit 136 and sends the number of statuses to the status estimating circuit 136. The number of statuses is the (number of taps - 1)-th power of the number of signal points available.

The operation of the MLSE receiver will be described with reference to examples of impulse responses of transmission lines shown in Figs. 8 (a) and (b). When the length of an impulse response of a transmission line is relatively short, the impulse response can be represented with for example two samples as shown by arrows of Fig. 8 (a). The other samples can be treated as zero. On the other hand, when the length of an impulse response of a transmission line is relatively long, the impulse response can be represented with for example four samples as shown by arrows of Fig. 8 (b). In this embodiment, the number of taps of the matched filter 135 is determined corresponding to a valid length of an impulse response of a transmission line (minimum time period).

In Fig. 11, the number-of-tap setting circuit 139 adds a predetermined offset (1 or 0 symbol period) to a time period between a least delayed component and a most delayed component of impulse response components that are received from the transmission line estimating circuit 5 and each vary by a symbol period and whose absolute values exceed a predetermined threshold value. The tap setting circuit 13 divides the resultant time period by the symbol frequency so as to convert the received impulse response into the number of taps.

The coefficient setting circuit 138 determines tap coefficients for the number of taps supplied from the number-of-tap setting circuit 139 according to the impulse response supplied from the transmission line estimating circuit 5 and supplies the determined tap coefficients to the matched filter 135. The coefficient setting circuit 138 calculates complex conjugation values of the estimated values of the impulse response components of the transmission line for the taps and inverts the complex conjugation values with respect to time axis. The resultant values are supplied to the matched filter 135.

The above-described matched filter 135 can be constructed of the transversal filter shown in Fig. 9.

Next, an operation of the matched filter 135 will be described with reference to Fig. 9. In Fig. 9, the matched filter 135 comprises M one-sample delaying circuits 301 to 30M, M switches S0 to SM, multipliers 400 to 40(N - 1), and a summing circuit 130. The one-sample delaying circuits 301 to 30M each delay a digital signal by one sample period (symbol period). The switches S0 to SM connect or disconnect M + 1 digital signals, each of which differ by one sample period. The multipliers 400 to 40(N-1) multiply tap coefficients C0 to C(N - 1), which pass through the closed switches S0 to S(N - 1), respectively. The summing circuit 130 sums the multiplied results supplied from the multipliers 400 to 40M and supplies the summed result to the output terminal 170.

In other words, the matched filter 135 is basically constructed of a transversal filter. In addition, the matched filter 135 can vary the number of taps valid. However, the delay time T of τ time period delaying device is T.

The switches S0 to SM are opened and closed corresponding to a number-of-tap signal supplied from the number-of-tap setting circuit 139. Fig. 9 shows a state where N switches S0 to S[N - 1] are closed and the switches SN to SM are opened. Thus, the coefficient setting circuit 138 outputs the coefficients C0 to C[N - 1] to S0 to S[N - 1], respectively.

In such a manner, the matched filter 135 controls the opening and closing of the switches and sets the tap coefficients. When a received signal is supplied to the matched filter 135, since the tap coefficients are set to the time-axis-inverted characteristics of the impulse response of the transmission line, the influence of the noise is minimized. The resultant signal is supplied to the status estimating circuit 136.

To filter N tap coefficients, only N adjacent switches of the switches S0 to SM are closed. Although noise can be removed without the need to close the switches S0 to S[N - 1], when the processing delay time of the matched filter 135 should be minimized, the switches should be preferably closed in such a way that N outputs with small delay time are extracted.

Regardless of any impulse response of a transmission line, switches to be closed (for example, S0) may be omitted.

In the above-described embodiment, the matched filter 135 was constructed of a dedicated circuit as shown in Fig. 9. However, it should be appreciated that the function of the matched filter 135 can be accomplished by for example a DSP.

The status estimating circuit 136 performs maximum likelihood estimation for a transmitted symbol with a received signal sequence supplied from the matched filter 135. The estimated result is supplied to the estimated signal output terminal 7. In the above-described embodiment, the status estimating circuit 136 performs the maximum likelihood estimation corresponding to Viterbi algorithm.

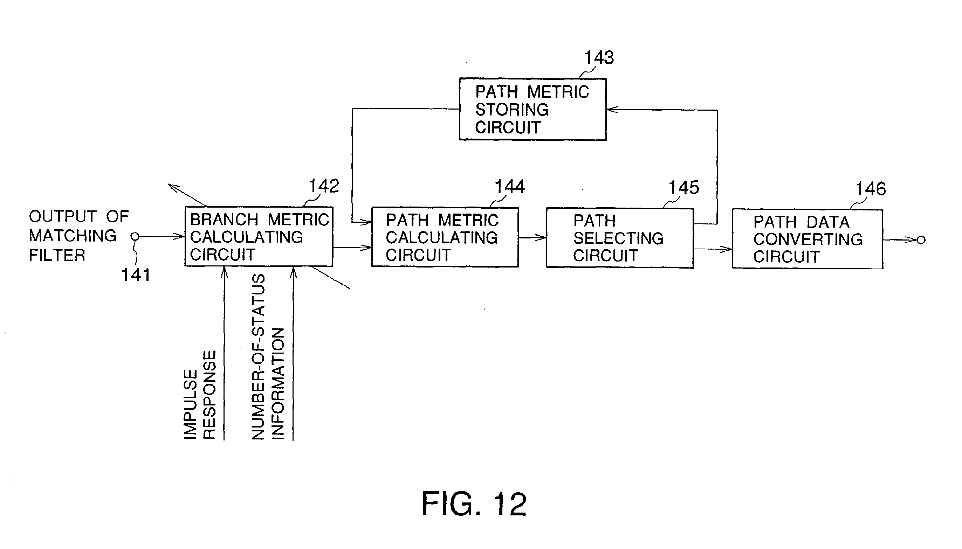

Fig. 12 shows a construction of the status estimating circuit 136, which employs the Viterbi algorithm. The status estimating circuit 136 comprises a branch metric calculating circuit 142, a path metric calculating circuit 144, a path metric selecting circuit 145, a path metric storing circuit 143, and a path data converting circuit 146. The branch metric calculating circuit 142 calculates the distance between a received signal and each of available statuses, sample by sample, with a received signal supplied from the matched filter through the input terminal and an impulse response supplied from the transmission line estimating circuit 5. This distance is referred to as the branch metric. The path metric calculating circuit 144 calculates the distance of a signal sequence corresponding to the calculated result of the branch metric with a received signal and a sequence signal of estimated statuses. This distance is referred to as the path metric. The path selecting circuit 145 selects an estimated signal sequence most close to the received signal sequence. The path metric storing circuit 143 stores a path metric that is used by the path metric calculating circuit 144. The path data converting circuit 146 successively selects data sequence of an estimated value sequence most close to the received signal sequence.

As described above, the status estimating circuit 136 requires an impulse response of a transmission line so as to calculate a branch metric, which is an evaluated value. The transmission line estimating circuit 5 supplies the impulse response of the transmission line to the branch metric calculating circuit 142. In this embodiment, the number of statuses to be considered for the Viterbi algorithm is minimized (namely, the number of statuses is set by the number-of-tap setting circuit 139) so as to reduce the calculating amount of the Viterbi algorithm. The number of impulse response components of the transmission line used for the metric calculation is the number of taps that is set by the number-of-tap setting circuit 139.

For example, when the status estimating circuit 136 is constructed of a DSP, the number of taps, which is supplied from the branch metric calculating circuit 142, the number of impulse response components, which are used for calculations corresponding to the number of statuses, or the number of statuses of the algorithm may be selected. One of a plurality of branch metric calculation processing portions used for different minimum time periods may be used for the branch metric calculating circuit 14.

Circuits other than the branch metric calculating circuit 142 may perform different processes depending on the number-of-status information.

Thus, according to the above-described embodiment, the number of taps of the matched filter 135 is changed corresponding to the minimum time period of an impulse response of a transmission line. In addition, the number of statuses to be considered in the status estimating circuit 136 can be changed. Thus, without a deterioration of characteristics of a received wave, a transmitted symbol with proper calculated amount corresponding to the impulse response of the transmission line can be decoded. Consequently, according to the present invention, the average decoding time and power consumption can be decreased.

A construction for the maximum likelihood estimation is disclosed in for example "Evaluation of Performance of Maximum Likelihood Decoders for Mobile Communications (translated title)", The Institute of Electronics, Information, and communication Engineers of Japan, Technical Study Report, 1988, RCS 88 - 38. The status estimating circuit 136 may be constructed of this maximum likelihood decoder. In the above-mentioned first embodiment, adaptive equalization of a received signal that had been PSK modulated was described. However, it should be noted that the present invention is not limited to this construction. Instead, QPSK (Quadrature PSK) modulation, MSK (Minimum Shift Keying) modulation, or QAM (Quadrature AM) may be used for adaptive equalization for a received signal. In the case of a received signal that has been QPSK modulated, when the signal is synchronous detected and a complex signal composed of an inphase component and a quadrature component are processed by the transmission line estimating circuit 5, the matched filter 135, the status estimating circuit 136, and the like, a delayed wave can be adaptive equalized. In the first embodiment, a signal received from an antenna was directly supplied to the frequency converting circuit 2. However, it should be understood that the present invention is not limited to such a construction. Instead, a signal received from an antenna may be mixed with a local frequency and the resultant signal with an intermediate frequency may be supplied to the frequency converting circuit 2.

In the embodiment of the MLSE receiver, the number of taps of the matched filter 135 was changed corresponding to an impulse response of an estimated transmission line. However, it should be appreciated that the present invention is not limited to such a construction. Instead, the number of statuses considered in the status estimating circuit 136 may be changed corresponding to an impulse response of a transmission line. In this construction, nearly the same effect as the above-described embodiment can be accomplished.

In the above-described embodiment, the Viterbi algorithm was employed for the status estimating circuit 136. However, another maximum likelihood estimating algorithm may be employed. In other words, any construction where the number of statuses considered in the status estimating circuit can be changed corresponding to an impulse response of a transmission line may be used.

In the above-described embodiment, to determine whether or not a received signal is a multiplexed wave, an impulse response of a transmission line was estimated. However, it should be understood that the present invention is not limited to such a construction. Instead, the determination may be performed by estimating other characteristics.

In the first and second embodiments, the constructions of the DFE circuits of Figs. 6 and 9 were shown as examples of the adaptive equalizing circuit 10. However, the present invention is not limited to such constructions. Instead, the adaptive equalizing circuit 10 may be accomplished by a MLSE type equalizing circuit shown in Fig. 11.

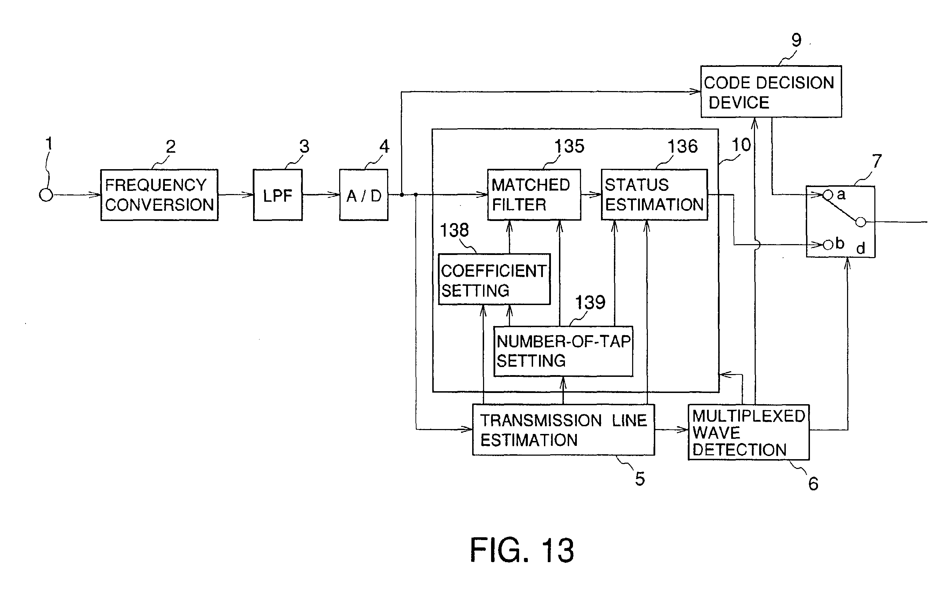

Next, with reference to Fig. 13, the case that a equalizing circuit of a MLSE type receiver is used in the construction of the first embodiment (namely, the MLSE type equalizer shown in Fig. 11 is used in the adaptive equalizing circuit 10 shown in Fig. 1) will be described.

This receiver comprises an input terminal 1, a frequency converting circuit 2, a low-pass filter (LPF) 3, an analog/digital (A/D) converter 4, a transmission line estimating circuit 5, a number-of-tap setting circuit 139, a coefficient setting circuit 138, a matched filter 135, a status estimating circuit 136, a multiplexed wave detecting circuit 6, a switch 7, and a code deciding circuit 9. In other words, the adaptive equalizing circuit 10 shown in Fig. 1 comprises the number-of-tap setting circuit 139, the coefficient setting circuit 138, the matched filter 135, and the status estimating circuit 136.

In Fig. 13, the operations of the input terminal 1, the frequency converting circuit 2, the low-pass filter 3, and the analog/digital converter 4 are the same as those of the above-described embodiments except that the analog/digital (A/D) converter 4 supplies a received digital signal to the code deciding circuit 9 as well as the transmission line estimating circuit 5 and the matched filter 135.

The transmission line estimating circuit 5 estimates impulse response characteristics of a transmission line with a received digital signal supplied from the analog/digital (A/D) converter 4 and a training signal sequence supplied from the training signal generating circuit. A sample value of the estimated impulse response is supplied to the multiplexed wave detecting circuit 6, the number-of-tap setting circuit 139, and the adaptive equalizing circuit 10.

The multiplexed wave detecting circuit 6 detects a multiplexed wave with a sequence of energy of the impulse response supplied from the transmission line estimating circuit 5. As an alternative method, the multiplexed wave detecting circuit 6 detects a time period for which a sample value of the impulse response of the transmission line exceeds a predetermined threshold value S. In one of these methods, the multiplexed wave detecting circuit 6 determines whether or not the received wave is a multiplexed wave. The multiplexed wave detecting circuit 6 outputs the determined result to the adaptive equalizing circuit 10, the code deciding circuit 9, and the switch 7.

When the determined result of the received signal corresponding to the output of the multiplexed wave detecting circuit 6 is a multiplexed wave, the adaptive equalizing circuit 10 performs the above-described number-of-tap setting operation. Otherwise, the adaptive equalizing circuit 10 does not perform the number-of-tap setting operation.

When the determined result of the multiplexed wave determination information received from the multiplexed wave detecting circuit 6 is a multiplexed wave, the switch 7 outputs a code where a delayed wave contained in a multiplexed wave has been equalized by the adaptive equalizing circuit 10 from the switch terminal 7c. Otherwise, the switch 7 outputs a code supplied from the code deciding circuit 9 from the switch terminal 7c.

### Industrial Utilization

The calculating amount for adaptive equalization can be reduced without a deterioration of equalized characteristics of a received signal.

This adaptive equalizing receiver is effective for high speed digital communications such as mobile telephone systems.

## Claims

1. An adaptive equalising receiver, comprising:-
transmission line estimating means for estimating the impulse response of a transmission line to a received signal;
an adaptive filter for setting the number of valid taps and adaptive equalising a supplied signal, said adaptive filter having a tap coefficient corresponding to the estimated impulse response of the transmission line; and
number-of-tap setting means for calculating the number of taps of said adaptive filter corresponding to a minimum time period of the estimated impulse response of the transmission line.

2. The adaptive equalising receiver as set forth in claim 1, wherein said adaptive filter takes the form of a transversal matched filter having a tap coefficient corresponding to the estimated impulse response output by said transmission line estimating means, thereby setting the number of valid taps and minimising the influence of noise of said received signal;
said adaptive equalising receiver further comprising status estimating means for setting the number of statuses to be considered and performing maximum likelihood estimation for a transmitted symbol sequence with an output of said matched filter corresponding to the estimated impulse response output by said transmission line estimating means; and
wherein said number-of-tap setting means is operable to calculate the number of taps of said matched filter and the number of statuses to be considered corresponding to a minimum time period for which the estimated impulse response output by said transmission line estimating means is represented and to set the number of taps of said matched filter and the number of statuses of said status estimating means.
